# DEMANDE DE BREVET EUROPEEN

(11) **EP 2 360 617 A1**
(43) Date de publication de la demande: **24.08.2011**
(21) Numéro de dépôt: 10305177.7
(22) Date de dépôt: 23.02.2010
(51) Int. Cl.: G06K 7/00, G06K 13/08

(54) **Procédé et équipement de personnalisation d'une carte mixte**

(71) Demandeur: Gemalto SA, 92190 Meudon (FR)
(72) Inventeur: Ouardi, Mohamed, 92170 Vanves (FR); Danet, Thierry, 77300 Fontainebleau (FR)

(57) **Abrégé**

L'invention concerne un équipement de personnalisation d'une carte mixte (1) comportant au moins un module de personnalisation (8) présentant une fente d'insertion (9) dans laquelle une carte mixte (1) est destinée à être insérée, ledit module de personnalisation (8) comportant des pointes (13) destinées à être mises en contact avec des plages de contact (5) de ladite carte mixte (1), caractérisé en ce que ledit module de personnalisation (8) comporte en outre un moyen de décharge antistatique connecté à la masse, ledit moyen de décharge antistatique étant en amont de ladite fente d'insertion (9) pour frotter la surface de ladite carte mixte (1) lors de son introduction dans ladite fente d'insertion (9).

L'invention concerne également un procédé de personnalisation associé à un tel équipement.

## Description

La présente invention concerne un procédé et un équipement de test et de personnalisation d'une carte mixte, c'est à dire pouvant fonctionner selon les deux modalités : sans contacts et par contacts.

Selon une réalisation classique, la carte mixte (« Smart Card », « Combi Card » ou « Dual Interface Card» selon la terminologie anglaise employée) comporte un corps de carte, une antenne, des zones de contact et un module électronique comportant une partie avec contact reliée auxdites zones de contact et une partie sans contact reliée à ladite antenne.

Ces cartes fonctionnent à la fois grâce à des données transmises par des contacts externes affleurant la surface de la carte sur les zones de contact et grâce à des données transmises sans contact, via un couplage électromagnétique à distance entre l'antenne de la carte et une antenne d'appareil récepteur ou lecteur. Le couplage peut être réalisé en mode lecture ou en mode lecture/écriture.

Les cartes mixtes sont destinées par exemple, à des opérations de télébillétique dans lesquelles elles sont débitées à distance d'un certain nombre d'unités lorsqu'elles passent au voisinage d'une borne (fonctionnement sans contact), et dans lesquelles elles sont rechargées dans un distributeur compatible avec les cartes à contact standard (fonctionnement par contacts). Par exemple, les cartes mixtes permettent la réalisation d'opérations de débit dans des véhicules de transport en commun, et notamment dans le métro, le bus ou le train, d'opérations bancaires, de communications téléphoniques, ou de diverses opérations d'identification.

Ces cartes sont fabriquées en série dans des processus industriels. A l'issue de leur fabrication, les cartes sont testées et personnalisées. Les tests permettent de vérifier le fonctionnement de la carte. La personnalisation permet d'entrer les informations relatives à l'utilisateur de la carte dans le module électronique.

Toutefois, on constate qu'un nombre important de puces à circuit intégré des parties sans contact peuvent être déprogrammées ou présenter des dysfonctionnements suite à cette étape de test et de personnalisation.

Un but de l'invention est de palier à cet inconvénient en proposant un procédé et un équipement de test et de personnalisation d'une carte mixte pour lesquels le taux de rebus est diminué.

A cet effet, la présente invention a pour objet un équipement de transfert ou chargement de données dans une carte mixte comportant au moins un module de transfert ou chargement destiné à être mise en contact avec des plages de contact de ladite carte mixte, caractérisé en ce que ledit module comporte en outre un moyen de décharge antistatique connecté à la masse, ledit moyen de décharge antistatique opérant avant le transfert ou chargement.

L'invention utilise notamment cet équipement en tant qu'équipement de test et de personnalisation d'une carte mixte comportant au moins un module de test et de personnalisation présentant une fente d'insertion dans laquelle une carte mixte est destinée à être insérée, ledit module de test et de personnalisation comportant des pointes de test destinées à être mises en contact avec des plages de contact de ladite carte mixte, caractérisé en ce que ledit module de test et de personnalisation comporte en outre un moyen de décharge antistatique connecté à la masse, ledit moyen de décharge antistatique étant en amont de ladite fente d'insertion pour frotter la surface de ladite carte mixte lors de son introduction dans ladite fente d'insertion.

Les inventeurs ont en effet découvert que le rebus d'un nombre important de cartes était dû aux nombreuses sources de pollution électrostatiques et/ou électromagnétiques provenant de l'environnement de l'équipement de test et de personnalisation, tels que des champs électromagnétiques provenant des câbles d'alimentation, des champs électrostatiques provenant de la carcasse de l'équipement ou encore des modules de test et de personnalisations voisins. Les inventeurs ont compris que les champs résultants de cette pollution étaient facilement captés par les antennes des cartes mixtes, d'autant plus que les corps de cartes en plastique favorisent l'accumulation des charges à leur surface et que les antennes ne sont pas reliées à la masse. Les antennes alors chargées à un potentiel flottant, produisent des décharges électrostatiques, (« Electrostatic Discharge » ou « ESD » en anglais) considérablement élevées, de l'ordre de 300V, dès le contact des éléments contacteurs des modules de test et de personnalisation sur les plages de contact des cartes. Ces décharges sont à la base des dysfonctionnements de la carte. Afin d'obtenir les meilleurs résultats, c'est donc avant le contact des éléments contacteurs des modules de test et de personnalisation avec les plages de contact de la carte que les charges électrostatiques présentes à la surface des cartes doivent être éliminées.

En outre, on profite du mouvement d'introduction de la carte dans la fente d'insertion du module de test et de personnalisation pour balayer la surface de la carte avec le moyen de décharge antistatique.

Le moyen de décharge antistatique permet ainsi de réduire les risques de décharges électrostatiques, en conduisant les charges électrostatiques vers la masse par frottement de la surface de la carte, dès l'introduction de la carte dans l'équipement de test et de personnalisation, au moment de son passage dans la fente d'insertion.

On peut prévoir que ledit moyen de décharge antistatique est passif, c'est-à-dire qu'il ne nécessite pas d'être alimenté électriquement pour pouvoir fonctionner. Le moyen de décharge antistatique passif est alors plus fiable, peu couteux et facile à implémenter dans les équipements de test et de personnalisation existants.

Selon un mode de réalisation, ledit moyen de décharge antistatique comporte une brosse antistatique.

La brosse antistatique comporte des brins souples destinés à balayer la surface de la carte, lors de son passage dans ladite fente d'insertion. Les brins souples sont par exemple attachés par un support métallique et la brosse comporte une tresse métallique reliée audit support et à la masse. L'ensemble est ainsi rendu conducteur, permettant la conduite des charges de la surface de la carte vers la masse.

La brosse antistatique est un moyen de décharge antistatique passif puisqu'elle fonctionne sans alimentation. Elle présente en outre l'avantage d'être fiable, peu couteuse et peut être fabriquée selon un large éventail de configurations pour s'adapter au mieux à l'équipement de test et de personnalisation.

Ladite brosse antistatique peut comporter des brins en fibre de carbone. Les fibres de carbone sont particulièrement douces et souples tout en étant conductrices, ce qui permet de ne pas rayer la surface de la carte lors du brossage de celle-ci.

Alternativement, ladite brosse antistatique comporte des brins en acier inoxydable.

Selon un mode de réalisation, ladite brosse antistatique présente des brins en continu, c'est-à-dire attachés de manière ininterrompue, le long du support métallique de ladite brosse antistatique. Ce mode de réalisation permet de bien balayer la totalité de la surface de la carte.

Selon un autre mode de réalisation, ladite brosse antistatique présente des brins attachés de manière discontinue le long du support métallique, par exemple les brins sont regroupés en paquets.

Ladite brosse antistatique présente par exemple des brins sur une longueur au moins égale à la longueur de la tranche de ladite carte mixte présentée à fente d'insertion, de manière à brosser ladite carte mixte sur toute sa surface au cours de son introduction.

On peut en outre prévoir que ladite brosse antistatique présente des brins dont la longueur est au moins supérieure à l'épaisseur de ladite carte mixte.

Selon une réalisation, ledit moyen de décharge antistatique comporte deux brosses antistatiques, lesdites brosses antistatiques étant agencées de part et d'autre de ladite fente d'insertion, de manière à brosser ladite carte mixte sur ses deux faces au cours de son introduction.

L'invention a également pour objet un procédé de transfert ou chargement de données dans une carte mixte comportant des plages de contact, caractérisé en ce qu'il comporte
- une première étape dans laquelle on enlève des charges électrostatiques présentes à la surface de ladite carte mixte, et
- une deuxième étape dans laquelle on met ladite carte mixte sous
   tension par contact électrique des plages de contact.

L'invention met en oeuvre le procédé ci-dessus dans le cadre d'un procédé de test et de personnalisation d'une carte mixte dans un équipement de test et de personnalisation comportant au moins un module de test et de personnalisation dans lequel une carte mixte est destinée à être insérée, ledit module de test et de personnalisation comportant des pointes de test destinées à être mises en contact avec des plages de contact de ladite carte mixte, caractérisé en ce qu'il comporte
- une première étape dans laquelle on enlève des charges électrostatiques présentes à la surface de ladite carte mixte lors de l'introduction de ladite carte mixte dans ledit module de test et de personnalisation par frottement de ladite carte mixte à un moyen de décharge antistatique connecté à la masse, ledit moyen de décharge antistatique étant en amont dudit module de test et de personnalisation, et
- une deuxième étape dans laquelle on met ladite carte mixte sous tension par contact des pointes de test sur lesdites plages de contact.

D'une manière générale, l'équipement ou le procédé de test et de personnalisation peut être un équipement ou un procédé de chargement ou transfert, lecture, échange de données dans ou avec la carte.

Le module de test et de personnalisation dans lequel une carte mixte est destinée à être insérée, comportant des pointes de test peut être alternativement un module de chargement ou de transfert de données avec la carte dans lequel une carte mixte est destinée à être insérée, ledit module comportant des pointes ou connecteur de transfert ou de chargement.

De même, l'équipement ou le procédé peut concerner le test uniquement et/ou la personnalisation ou des échanges de données en général.

D'autres caractéristiques et avantages de l'invention ressortiront de la description suivante, donnée à titre d'exemple, sans caractère limitatif, en regard des dessins annexés sur lesquels :
- la figure 1 représente une vue schématique de la surface supérieure d'une carte mixte,
- la figure 2 est un schéma illustrant un couplage électromagnétique à distance entre une antenne de carte mixte et une antenne d'un appareil récepteur ou lecteur,
- la figure 3a représente une vue schématique de côté d'un premier exemple de réalisation d'une brosse antistatique,
- la figure 3b représente une vue partielle de face de la brosse antistatique de la figure 3a,
- la figure 3c représente une vue schématique de côté d'un deuxième exemple de réalisation d'une brosse antistatique,
- la figure 4a représente une vue de côté d'un module de test et de personnalisation avant l'implémentation d'une brosse antistatique,
- la figure 4b représente une vue analogue à la figure 4a, avec une brosse antistatique implémentée dans le module de test et de personnalisation,
- la figure 5a représente le module de test et de personnalisation de la figure 4a,
- la figure 5b représente une vue analogue à la figure 5a sur laquelle on a représenté une brosse antistatique selon un premier mode de réalisation,
- la figure 6a représente une vue de côté du module de test et de personnalisation de la figure 5a pourvue d'une brosse antistatique selon un premier mode de réalisation,
- la figure 6b représente une vue de dessus du module de test et de personnalisation de la figure 6a dans laquelle une carte mixte est insérée,
- la figure 6c représente une vue similaire à la figure 6b,
- la figure 7a représente une vue de côté d'un module de test et de personnalisation pourvue d'une brosse antistatique selon un deuxième mode de réalisation,
- la figure 7b représente une vue de face du module de test et de personnalisation de la figure 7a, et
- la figure 8 représente un diagramme d'un procédé de test et de personnalisation d'une carte mixte.

Sur ces figures, les éléments identiques portent les mêmes numéros de référence. Pour plus de clarté, les étapes de procédé sont numérotées à partir de 100.

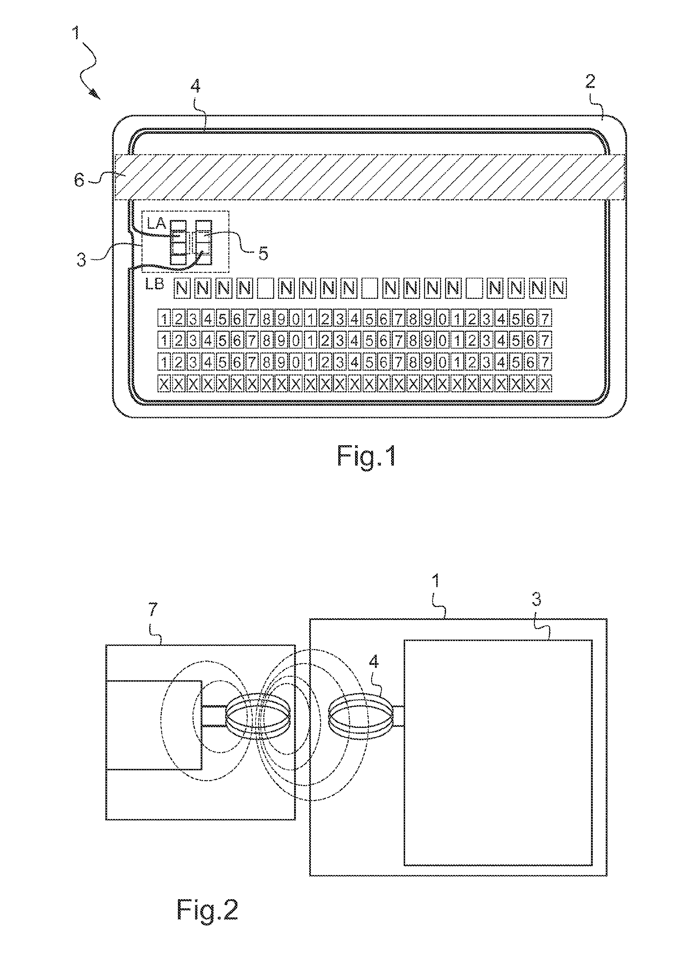

La figure 1 représente un exemple de carte mixte 1, (« Smart Card », « Combi Card » ou « Dual Interface Card» selon la terminologie anglaise employée), par exemple destinée à la réalisation d'opérations bancaires, comportant :
- un corps de carte 2, par exemple en plastique,
- un module électronique 3 comprenant une première puce à circuit intégré pour la partie sans contact et une deuxième puce à circuit intégré pour la partie avec contact,
- une antenne 4 du type bobine d'inductance, connectée à ladite première puce à circuit intégré, via deux contacts LA, LB situés à l'arrière du module électronique 3, l'antenne 4 étant noyée dans le corps de carte 2, et
- un ensemble de plages de contact 5 métalliques, huit dans cet exemple, connectées à ladite deuxième puce à circuit intégré et affleurant la surface supérieure de la carte mixte 1.

La carte 1 peut en outre comporter une bande magnétique 6 à l'arrière du corps de carte 2.

On a illustré sur la figure 2, le couplage électromagnétique à distance entre le module électronique 3 de la carte 1 et un appareil récepteur ou lecteur 7.

Les cartes sont insérées dans un équipement de test et de personnalisation destiné à tester le fonctionnement de la carte puis à la personnaliser en entrant des informations relatives à l'utilisateur de la carte, dans le module électronique 3 via un module de test et de personnalisation.

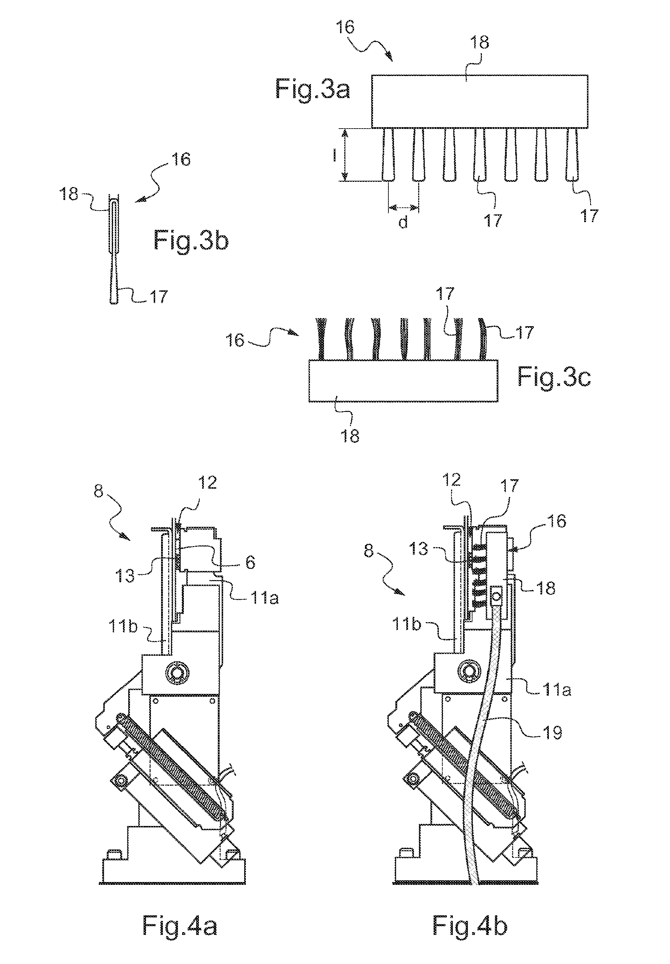

Les figures 4a à 6c représentent un exemple de réalisation d'un module de test et de personnalisation 8. Chaque équipement de test et de personnalisation peut comporter un ou plusieurs modules, présentant la forme de tête de test et de personnalisation.

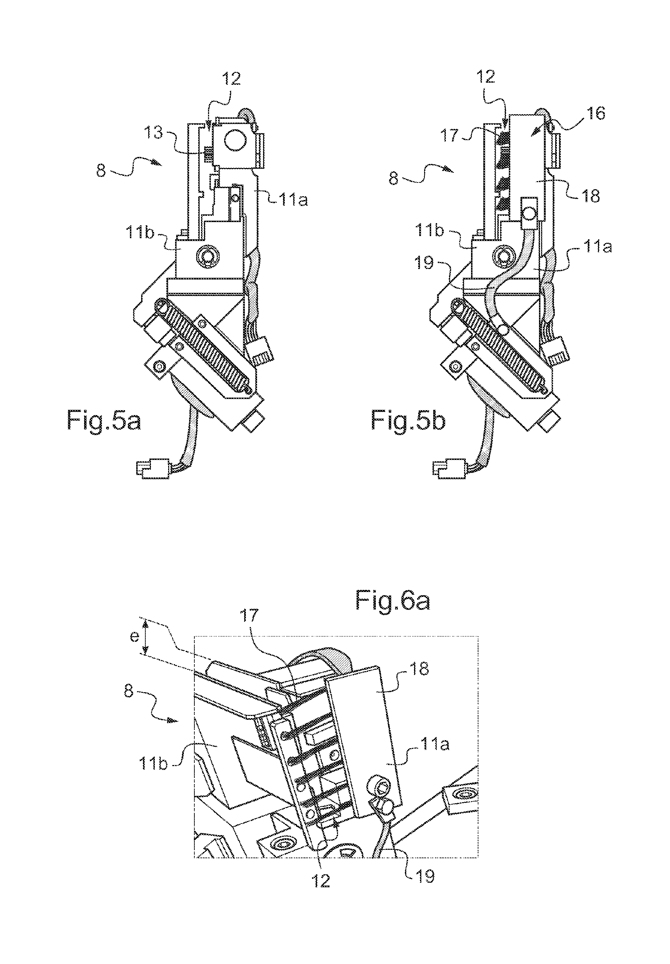

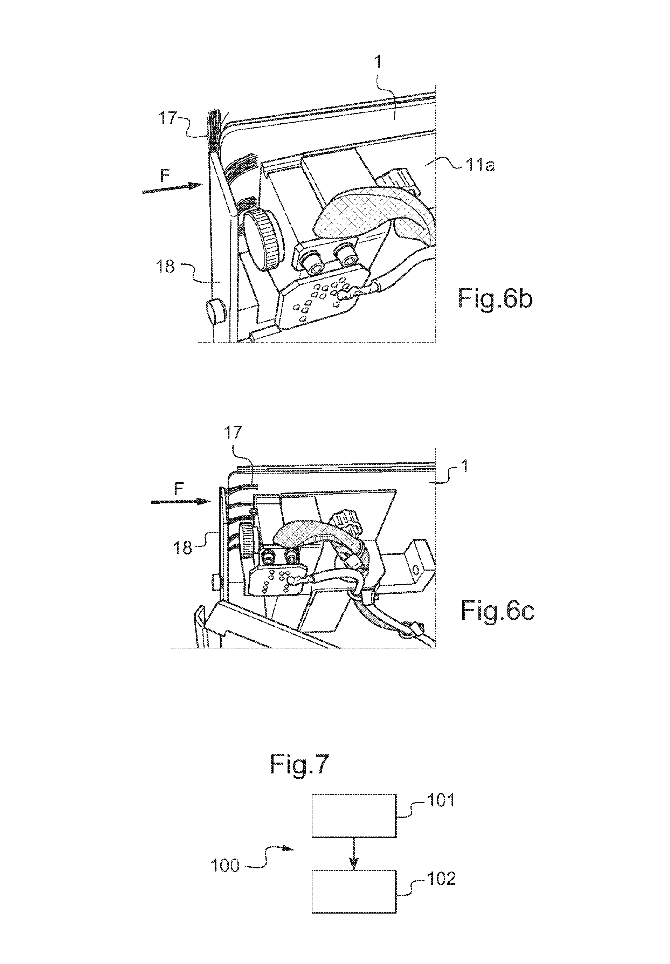

Le module de test et de personnalisation 8 comporte une fente d'insertion 9 dans laquelle la carte mixte 1 est destinée à être insérée (figures 6b et 6c).

La fente d'insertion 9 présente une épaisseur e, par exemple de l'ordre de 1 cm, pour permettre le passage d'une carte par glissement par une embouchure latérale 12. Dans l'exemple représenté, la carte 1 est destinée à être introduite en présentant sa tranche la plus petite (largeur) à l'embouchure 12 de la fente d'insertion 9. Un détecteur de fin de course (non visible) placé au fond à l'opposé de l'embouchure 12 permet de détecter lorsqu'une carte a été insérée.

Le module de test et de personnalisation 8 comporte en outre des pointes de test 13, huit dans cet exemple, dont quatre sont visibles sur la figure 4a, destinées à contacter les plages de contact 5 associées de la carte 1, pour mettre la carte 1 sous tension afin de la tester et/ou de la personnaliser, toute ou partie de la personnalisation pouvant également être réalisée sans contact, via une antenne du module de test et de personnalisation.

Les pointes de test 13 sont par exemple portées par une partie mobile 11a en regard d'une partie fixe 11b, du module de test et de personnalisation 8, pour venir contacter les plages de contact 5 une fois la carte mixte 1 insérée. Les pointes de test 13 sont reliées à un appareil lecteur de l'équipement de test et de personnalisation via un câble électrique.

Le module de test et de personnalisation 8 comporte en outre un moyen de décharge antistatique connecté à la masse, en amont d'une embouchure 12 de la fente d'insertion 9 pour frotter la surface de la carte mixte 1 lors de son passage dans l'embouchure 12 et conduire les charges électrostatiques présentes à la surface de la carte mixte 1, vers la masse, avant sa mise sous tension.

Les inventeurs ont en effet découvert que le rebus d'un nombre important de cartes était dû aux nombreuses sources de pollution électrostatiques et/ou électromagnétiques provenant de l'environnement de l'équipement de test et de personnalisation, tels que des champs électromagnétiques provenant des câbles d'alimentation, des champs électrostatiques provenant de la carcasse de l'équipement ou encore des modules de test et de personnalisations voisins. Les inventeurs ont compris que les champs résultants de cette pollution étaient facilement captés par les antennes 4 des cartes mixtes 1, d'autant plus que les corps de cartes 2 en plastique favorisent l'accumulation des charges à leur surface et que les antennes 4 ne sont pas reliées à la masse. Les antennes 4 alors chargées à un potentiel flottant, produisent des décharges électrostatiques, (« Electrostatic Discharge » ou « ESD » en anglais) considérablement élevées, de l'ordre de 300V, dès le contact des pointes de test 13 des modules de test et de personnalisation 8 sur les plages de contact 5. Ces décharges sont à la base des dysfonctionnements de la carte 1. Afin d'obtenir les meilleurs résultats, c'est donc avant la mise sous tension des cartes 1 que les charges électrostatiques présentes à la surface des cartes doivent être éliminées.

En outre, on profite du mouvement d'introduction de la carte 1 dans la fente d'insertion 9 du module de test et de personnalisation 8 pour balayer la surface de la carte 1 avec le moyen de décharge antistatique.

Le moyen de décharge antistatique permet ainsi de réduire les risques de décharges électrostatiques, en conduisant les charges vers la masse par frottement de la surface de la carte 1, dès l'introduction de la carte dans l'équipement de test et de personnalisation, au moment de son passage dans l'embouchure 12 de la fente d'insertion 9.

On peut prévoir que le moyen de décharge antistatique est passif, c'est-à-dire qu'il ne nécessite pas d'être alimenté électriquement pour pouvoir fonctionner. Le moyen de décharge antistatique passif est alors plus fiable, peu couteux et facile à implémenter dans les équipements de test et de personnalisation existants.

Selon un mode de réalisation représenté sur les figures, le moyen de décharge antistatique comporte une brosse antistatique 16, par exemple fixée sur la partie mobile 11a du module de test et de personnalisation 8.

La brosse antistatique 16 comporte des brins 17a, 17b souples destinés à balayer la surface de la carte 1, lors de son passage dans l'embouchure 12. Les brins 17a, 17b souples sont attachés par un support métallique 18 et la brosse antistatique 16 comporte une tresse métallique 19 reliée audit support 18 et à la masse. L'ensemble est ainsi rendu conducteur, permettant la conduite des charges de la surface de la carte vers la masse.

La brosse antistatique 16 est un moyen de décharge antistatique passif puisqu'elle fonctionne sans alimentation. Elle présente en outre l'avantage d'être fiable, peu couteuse et peut être fabriquée selon un large éventail de configurations pour s'adapter au mieux à l'équipement de test et de personnalisation.

La brosse antistatique 16 peut comporter des brins 17a, 17b en fibre de carbone. Les fibres de carbone sont particulièrement douces et souples tout en étant conductrices, ce qui permet de ne pas rayer la surface de la carte 1 lors du brossage de celle-ci.

Alternativement, la brosse antistatique 16 comporte des brins en acier inoxydable.

Selon un mode de réalisation représenté sur les figures 3c, 7a et 7b, la brosse antistatique présente des brins 17a en continu, c'est-à-dire attachés de manière ininterrompue, le long du support métallique 18. Ce mode de réalisation permet de bien balayer toute la surface de la carte : le corps de carte 2 et les plages de contact 5.

Selon un autre mode de réalisation visible sur les figures 3a, 3b, 4b, 5b, 6a, 6b et 6c, la brosse antistatique 16 présente des brins 17b attachés de manière discontinue le long du support métallique 18, par exemple les brins 17b sont regroupés en paquets régulièrement espacés d'une distance d de l'ordre de 1 cm.

La brosse antistatique 16 présente par exemple des brins 17b sur une longueur au moins égale à la longueur de la tranche de la carte mixte 1 présentée à l'embouchure 12 de la fente d'insertion 9, de manière à brosser la carte mixte sur toute la surface supérieure au cours de son introduction.

On prévoit en outre que la brosse antistatique 16 présente des brins 17a, 17b dont la longueur 1 est au moins supérieure à l'épaisseur de la carte 1, par exemple, la longueur 1 est de l'ordre de 15 mm.

On distingue ainsi sur les figures 6b et 6c, une carte mixte 1 qui a été insérée dans la fente d'insertion 9 dans le sens d'orientation représenté par la flèche F. Les brins 17b sont repliés sur un bord de la surface de la carte 1 après balayage. Les brins 17b ne doivent pas être trop longs pour ne pas contacter les plages de contact 5 lorsque la carte 1 est en fin de course dans la fente d'insertion 9 et qu'elle va être mise sous tension.

On distingue également sur le mode de réalisation de la brosse antistatique des figures 7a et 7b, que les brins en continu 17a, sont prévus plus longs que la largeur de la fente d'insertion 9 pour bien couvrir toute l'embouchure 12 avant l'insertion de la carte dans le sens d'introduction de la flèche F.

Selon une autre réalisation non représentée, le moyen de décharge antistatique comporte deux brosses antistatiques de part et d'autre de l'embouchure 12, agencées de manière à brosser la carte mixte 1 sur ses deux faces au cours de son introduction. On prévoit par exemple des brins en fibres de carbone pour ne pas rayer la bande magnétique 6 à l'arrière de la carte 1.

La figure 8 représente les différentes étapes d'un procédé de test et de personnalisation 100 d'une carte mixte.

Le procédé de test et de personnalisation 100 comporte
- une première étape 101 dans laquelle on enlève des charges électrostatiques présentes à la surface de la carte mixte 1 lors de l'introduction de la carte mixte 1 dans l'embouchure 12 de la fente d'insertion 9 par frottement de la carte mixte 1 à un moyen de décharge antistatique connecté à la masse, le moyen de décharge antistatique étant en amont de ladite embouchure, et
- une deuxième étape 102 dans laquelle on met la carte mixte 1 sous tension par contact des pointes de test 13 sur les plages de contact 13, afin de tester et/ou de personnaliser la carte.

Le procédé et l'équipement de test et de personnalisation de la carte permettent ainsi d'augmenter le rendement de production en réduisant le taux de dysfonctionnements induits par l'étape de test et de personnalisation.

## Revendications

1. Equipement de transfert ou chargement de données dans une carte mixte (1) comportant au moins un module de transfert ou chargement (8) destiné à être mise en contact avec des plages de contact (5) de ladite carte mixte (1), **caractérisé en ce que** ledit module (8) comporte en outre un moyen de décharge antistatique connecté à la masse, ledit moyen de décharge antistatique opérant avant le transfert ou chargement.

2. Equipement de test et de personnalisation d'une carte mixte (1) utilisant l'équipement selon la revendication 1, ledit équipement comportant au moins un module de test et de personnalisation (8) présentant une fente d'insertion (9) dans laquelle une carte mixte (1) est destinée à être insérée, ledit module de test et de personnalisation (8) comportant des pointes de test (13) destinées à être mises en contact avec des plages de contact (5) de ladite carte mixte (1), **caractérisé en ce que** ledit module de test et de personnalisation (8) comporte en outre un moyen de décharge antistatique connecté à la masse, ledit moyen de décharge antistatique étant en amont de ladite fente d'insertion (9) pour frotter la surface de ladite carte mixte (1) lors de son introduction dans ladite fente d'insertion (9).

3. Equipement de test et de personnalisation selon la revendication 2, **caractérisé en ce que** ledit moyen de décharge antistatique est passif.

4. Equipement de test et de personnalisation selon la revendication 3, **caractérisé en ce que** ledit moyen de décharge antistatique comporte au moins une brosse antistatique (16).

5. Equipement de test et de personnalisation selon la revendication 4, **caractérisé en ce que** ladite brosse antistatique (16) comporte des brins (17) en fibre de carbone.

6. Equipement de test et de personnalisation selon la revendication 5, **caractérisé en ce que** ladite brosse antistatique (16) comporte des brins (17) en acier inoxydable.

7. Equipement de test et de personnalisation selon l'une des revendications 4 à 6, **caractérisé en ce que** ladite brosse antistatique présente des brins en continu le long d'un support métallique de ladite brosse antistatique.

8. Equipement de test et de personnalisation selon l'une des revendications 4 à 7, **caractérisé en ce que** ladite brosse antistatique (16) présente des brins (17) sur une longueur au moins égale à la longueur de la tranche de ladite carte mixte (1) présentée à ladite fente d'insertion (9).

9. Equipement de test et de personnalisation selon l'une des revendications 4 à 8, **caractérisé en ce que** ladite brosse antistatique (16) présente des brins (17) dont la longueur (1) est au moins supérieure à l'épaisseur de ladite carte mixte (1).

10. Equipement de test et de personnalisation selon l'une des revendications 4 à 9, **caractérisé en ce que** ledit moyen de décharge antistatique comporte deux brosses antistatiques, lesdites brosses antistatiques étant agencées de part et d'autre de ladite fente d'insertion (9).

11. Procédé transfert ou chargement de données dans une carte mixte comportant des plages de contact, **caractérisé en ce qu'**il comporte
- une première étape (101) dans laquelle on enlève des charges électrostatiques présentes à la surface de ladite carte mixte, et
- une deuxième étape (102) dans laquelle on met ladite carte mixte sous tension par contact électrique des plages de contact.

12. Procédé de test et de personnalisation d'une carte mixte dans un équipement de test et de personnalisation comportant au moins un module de test et de personnalisation dans lequel une carte mixte est destinée à être insérée, ledit module de test et de personnalisation comportant des pointes de test destinées à être mises en contact avec des plages de contact de ladite carte mixte, mettant en oeuvre le procédé selon la revendication 11, **caractérisé en ce qu'**il comporte
- une première étape (101) dans laquelle on enlève des charges électrostatiques présentes à la surface de ladite carte mixte lors de l'introduction de ladite carte mixte dans ledit module de test et de personnalisation par frottement de ladite carte mixte à un moyen de décharge antistatique connecté à la masse, ledit moyen de décharge antistatique étant en amont dudit module de test et de personnalisation, et
- une deuxième étape (102) dans laquelle on met ladite carte mixte sous tension par contact des pointes de test sur lesdites plages de contact.
